(19) **Europäisches Patentamt / European Patent Office / Office européen des brevets**

(11) **EP 3 455 523 B1**

(12) **FASCICULE DE BREVET EUROPEEN**

(45) Date de publication et mention
de la délivrance du brevet:
**25.11.2020 Bulletin 2020/48**

(21) Numéro de dépôt: **17725312.7**

(22) Date de dépôt: **26.04.2017**

(51) Int Cl.:
*F16H 61/04* (2006.01)     *B60K 6/48* (2007.10)

(86) Numéro de dépôt international:
**PCT/FR2017/050988**

(87) Numéro de publication internationale:
**WO 2017/194851 (16.11.2017 Gazette 2017/46)**

(54) **DISPOSITIF DE SYNCHRONISATION D'UN PIGNON SUR UN ARBRE DE BOITE DE VITESSES EN MODE REGENERATIF, PROCEDE ET VEHICULE AUTOMOBILE CORRESPONDANTS**

**VORRICHTUNG ZUR SYNCHRONISATION EINES RITZELS AUF EINER WELLE EINES GETRIEBES IN EINEM REGENERATIONSMODUS UND ENTSPRECHENDES VERFAHREN UND KRAFTFAHRZEUG**

**DEVICE FOR SYNCHRONISING A PINION ON A SHAFT OF A GEARBOX IN REGENERATION MODE, AND CORRESPONDING METHOD AND MOTOR VEHICLE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.05.2016 FR 1654135**

(43) Date de publication de la demande:
**20.03.2019 Bulletin 2019/12**

(73) Titulaire: **Renault S.A.S.**
**92100 Boulogne-Billancourt (FR)**

(72) Inventeurs:
• **KVIESKA, Pedro**
**78000 Versailles (FR)**
• **MERIENNE, Ludovic**
**91190 Gif-Sur-Yvette (FR)**

(56) Documents cités:
**WO-A1-97/08439      WO-A1-2009/136819**
**WO-A1-2014/162077   DE-A1-102005 016 117**
**US-A- 5 318 142     US-A1- 2002 032 097**

**Description**

**1. Domaine de l'invention**

L'invention concerne le domaine des passages de vitesses de véhicules automobiles hybrides ou électriques équipés d'une boîte de vitesses automatique. Elle concerne plus particulièrement un dispositif de synchronisation d'un arbre primaire avec un arbre secondaire. Elle concerne également un véhicule automobile et un procédé correspondants.

**2. Art antérieur**

L'invention s'applique sur toute transmission à arbres parallèles, dans laquelle des changements de rapport de transmission en rupture de couple s'effectuent par déplacement d'un moyen de couplage entre deux pignons de vitesses libres en rotation sur un arbre lié aux roues du véhicule.

Elle trouve une application non limitative sur une transmission hybride pour véhicule automobile muni d'un moteur thermique et d'une machine électrique d'entraînement, comportant deux arbres primaires concentriques portant chacun au moins un pignon de descente sur un arbre secondaire relié aux roues du véhicule et un premier moyen de couplage entre deux arbres primaires pouvant occuper trois positions, dans lesquelles: le moteur thermique est découplé de la chaîne cinématique reliant la machine électrique aux roues (première position), le moteur thermique entraîne les roues avec ou sans l'appoint de la machine électrique (deuxième position), ou le moteur thermique est couplé à la machine électrique pour additionner leurs couples (troisième position).

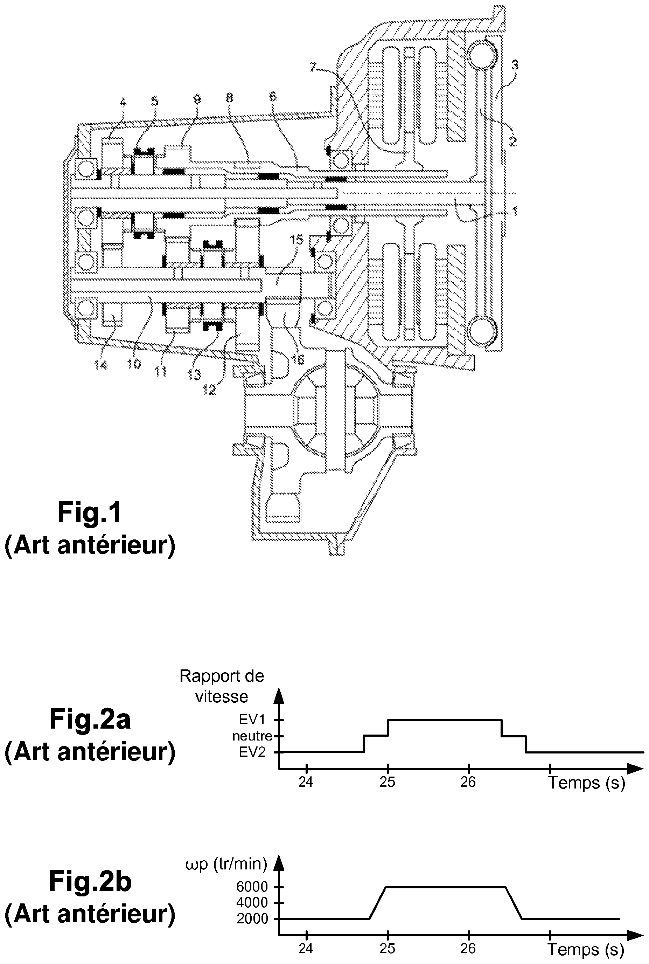

La figure 1 décrit un exemple non limitatif de transmission hybride relevant de ce principe d'architecture. Cette transmission comporte un arbre primaire plein 1 connecté directement par l'intermédiaire d'un système de filtration (moyeu amortisseur, double volant amortisseur ou autre) 2, au volant d'inertie 3 d'un moteur thermique (non représenté). L'arbre plein 1 porte un pignon fou 4 pouvant être connecté avec celui-ci par un premier système de couplage 5 (crabot, synchroniseur, ou autre type de coupleur progressif ou non). Un arbre primaire creux 6 est relié au rotor d'une machine électrique 7. L'arbre creux 6 porte deux pignons fixes 8, 9. Il peut être relié à l'arbre primaire plein 1 par l'intermédiaire du système de couplage 5. Un arbre secondaire 10 porte deux pignons fous 11 et 12. On peut relier les pignons fous 11, 12 à l'arbre primaire par l'intermédiaire d'un deuxième système de couplage 13 (crabot, synchroniseur, ou autre type de coupleur progressif ou non). L'arbre secondaire 10 porte également un pignon fixe 14 et un pignon de descente 15 vers un différentiel 16 relié aux roues du véhicule.

Comme indiqué plus haut, le premier moyen de couplage 5 peut occuper au moins trois positions dans lesquelles :

- le moteur thermique est découplé de la chaîne cinématique reliant la machine électrique 7 aux roues (baladeur au centre comme sur la figure 1),
- le moteur thermique entraîne les roues avec ou sans l'appoint de la machine électrique (baladeur à gauche), et
- le moteur thermique et la machine électrique 7 sont couplés de manière à additionner en direction des roues leurs couples respectifs (baladeur à droite).

L'agrément de conduite d'un véhicule équipé d'une boîte de vitesses automatique dépend dans une large mesure du temps écoulé pour un changement de vitesse. Un changement de vitesse requiert de réduire un écart de régime entre le régime de l'arbre primaire et le régime de l'arbre secondaire multiplié par un rapport de réduction, lequel rapport de réduction dépend du rapport de transmission engagé. Un accouplement des arbres primaire et secondaire n'est possible que lorsque l'écart de régime passe sous un certain seuil. Comme représenté sur les figures 2a et 2b, lors d'un changement de vitesse descendant, par exemple d'un rapport de transmission EV2 vers un rapport de transmission EV1 sur la figure 2a, l'arbre primaire doit être accéléré, par exemple pour passer d'un régime primaire $\omega p$ de 2000tr/min à un régime primaire $\omega p$ de 6000tr/min sur la figure 2b ; lors d'un changement de vitesse ascendant, par exemple du rapport de transmission EV1 vers le rapport de transmission EV2 sur la figure 2a, l'arbre primaire doit être décéléré, par exemple pour passer d'un régime primaire $\omega p$ de 6000tr/min à un régime primaire $\omega p$ de 2000tr/min sur la figure 2b. Sur la figure 1, le rapport de transmission EV1 correspond aux pignons 8 et 12, le crabot 13 étant positionné à droite et le rapport de transmission EV2 correspond aux pignons 9 et 11, le crabot 13 étant positionné à gauche.

Les demandes de brevet FR2988799 et FR3003620 suggèrent, pour un véhicule hybride, d'utiliser une machine électrique du véhicule pour synchroniser l'arbre primaire avec l'arbre secondaire du véhicule notamment pour apporter du couple lors d'un changement de vitesse descendant. Pour un changement de vitesse ascendant, une portion de l'énergie cinétique associée au régime primaire de l'arbre primaire est classiquement dissipée par pertes mécaniques afin de freiner l'arbre primaire.

Dans un contexte de réduction de la consommation énergétique des véhicules, il est intéressant de récupérer sous forme d'énergie électrique dans une batterie l'énergie cinétique issue de la décélération de l'arbre primaire lors d'un changement de vitesse ascendant. Dans la mesure où l'objectif visé est d'atteindre des temps de synchronisation courts, de l'ordre de 200ms, les puissances en jeu sont relativement élevées, de l'ordre de 50kW. Or, lorsque la batterie atteint un niveau de charge proche de 100%, par exemple 90%, elle ne peut accepter que peu de puissance. Ce point constitue un obstacle à la récupération d'énergie au cours d'un changement de vitesse ascendant.

Par ailleurs, pour permettre un changement de vitesse descendant rapide, il est nécessaire de fournir une puissance importante à la machine électrique pour accélérer l'arbre primaire. Or, lorsque la batterie atteint un niveau de charge proche de 0%, par exemple 10%, elle ne peut fournir que peu de puissance. Ce point constitue un obstacle à l'agrément de conduite.

Le document WO2009/136819 divulgue un procédé et un dispositif de changement de rapport de vitesse présentant des inconvénients similaires.

### 3. Objectifs de l'invention

L'invention propose une solution visant à pallier les inconvénients précités. Un objectif de l'invention est de permettre une meilleure valorisation de l'énergie grâce à l'utilisation d'un mode régénératif de la machine électrique pour synchroniser les arbres au cours d'un changement de vitesse ascendant. L'invention a également pour objectif d'améliorer l'agrément de conduite.

### 4. Résumé de l'invention

L'invention concerne un dispositif de synchronisation d'un régime primaire d'un arbre primaire recevant un couple électrique d'une machine électrique, avec un régime secondaire inférieur au régime primaire d'un arbre secondaire de transmission, les arbres primaire et secondaire étant découplés, l'arbre primaire ayant une énergie cinétique associée au régime primaire, le dispositif étant caractérisé en ce qu'il comporte des moyens pour fournir un couple électrique de freinage à l'arbre primaire jusqu'à ce que le régime primaire soit sensiblement égal au régime secondaire, ainsi que des moyens pour récupérer au moins partiellement, sous forme d'énergie électrique, l'énergie cinétique perdue par l'arbre primaire et transmettre ladite énergie électrique à un moyen de stockage d'énergie. La récupération de l'énergie cinétique de l'arbre primaire permet une meilleure valorisation de l'énergie au sein du véhicule.

Selon un mode de réalisation particulier, le dispositif comporte un onduleur. L'utilisation de l'onduleur en tant qu'élément régénératif présente l'avantage de ne pas nécessiter de composant supplémentaire pour récupérer l'énergie cinétique de l'arbre primaire dans la mesure où l'onduleur est déjà présent pour produire des tensions d'alimentation de la machine électrique.

Selon l'invention, le moyen de stockage d'énergie comporte une batterie couplée à un tampon d'énergie. Le tampon d'énergie couplé à la batterie permet au moyen de stockage, quel que soit le niveau de charge de la batterie, d'être en mesure de fournir une puissance correspondant à la puissance disponible maximale de la batterie. De manière analogue, le tampon d'énergie couplé à la batterie permet au moyen de stockage, quel que soit le niveau de charge de la batterie, d'être en mesure de recevoir une puissance correspondant à la puissance admissible maximale de la batterie. Par conséquent, ce mode de réalisation permet d'augmenter l'agrément de conduite et d'améliorer la valorisation de l'énergie.

Selon l'invention le tampon d'énergie comporte au moins une super-capacité. Les super-capacités présentent l'avantage de permettre d'atteindre des capacités de stockage d'énergie visées par l'invention pour un coût et un encombrement restreints.

Selon un mode de réalisation particulier, le dispositif comporte en outre une unité de commande configurée pour charger ladite énergie électrique dans le tampon d'énergie pendant le freinage de l'arbre primaire et pour décharger le tampon d'énergie dans la batterie une fois l'arbre primaire synchronisé avec l'arbre secondaire. L'unité de commande permet d'orchestrer la charge et la décharge de la batterie et du tampon d'énergie.

Selon un mode de réalisation particulier, l'unité de commande comporte un circuit de hachage. Le circuit de hachage permet de décharger le tampon d'énergie dans la batterie avec un courant adapté et de charger le tampon d'énergie sans limite de tension liée à la batterie.

Selon l'invention, l'unité de commande est configurée pour détecter un passage du niveau de charge de la batterie en dessous d'un seuil bas prédéfini et pour maintenir un niveau d'énergie prédéterminé dans le tampon d'énergie en cas de détection d'un passage du niveau de charge de la batterie en dessous du seuil bas. Ainsi, lorsque le niveau de charge de la batterie ne permet pas à la batterie de fournir à la machine électrique la puissance nécessaire à une synchronisation suffisamment rapide lors d'un changement de vitesse descendant, le tampon d'énergie dispose de l'énergie suffisante pour assurer l'apport de puissance à la machine électrique.

Selon un mode de réalisation particulier, la batterie fournit l'énergie permettant de maintenir un niveau d'énergie prédéterminé dans le tampon d'énergie après un changement de rapport de vitesse.

Selon un mode de réalisation particulier, l'unité de commande est configurée pour alimenter la machine électrique avec l'énergie contenue dans le tampon d'énergie lorsque la machine électrique fournit un couple d'accélération pour synchroniser un régime primaire de l'arbre primaire avec un régime secondaire supérieur au régime primaire de l'arbre secondaire. Ainsi, la durée de synchronisation est réduite et l'agrément de conduite est amélioré.

L'invention concerne également un véhicule automobile électrique ou hybride comprenant ledit dispositif.

L'invention concerne en outre un procédé de synchronisation selon la revendication 7.

## 5. Liste des figures

D'autres caractéristiques et avantages innovants ressortiront de la description ci-après, fournie à titre indicatif et nullement limitatif, en référence aux dessins annexés, dans lesquels :

- La figure 1 montre une chaîne cinématique d'une transmission hybride au neutre et sur ses deux rapports électriques dans l'art antérieur ;
- La figure 2a représente des changements de rapports de transmission au cours du temps dans l'art antérieur ;
- La figure 2b représente des changements de régimes primaires d'un arbre primaire correspondant aux changements de rapports de transmission de la figure 2a ;
- La figure 3 est une représentation schématique d'une machine électrique dans un repère de Park selon un mode de réalisation de l'invention ;
- La figure 4 est un schéma d'une structure de commande de la machine électrique de la figure 3 ;
- La figure 5a représente des changements de rapports de transmission au cours du temps selon un mode de réalisation de l'invention ;
- La figure 5b représente des variations du couple fourni par la machine électrique correspondant aux changements de rapports de transmission de la figure 5a ;
- La figure 5c représente des variations de la tension aux bornes de la batterie correspondant aux variations du couple fourni par la machine électrique de la figure 5b ;
- La figure 6 représente la puissance disponible dans la batterie et la puissance admissible par la batterie en fonction du niveau de charge de la batterie avec et sans tampon d'énergie ;
- La figure 7 est un schéma fonctionnel d'un moyen de stockage d'énergie comportant un tampon d'énergie selon un mode de réalisation de l'invention ; et
- La figure 8 est un schéma fonctionnel du tampon d'énergie de la figure 7 et de son unité de commande.

## 6. Description détaillée

Dans le cadre des véhicules hybrides ou électriques équipés d'une boîte de vitesses automatique, l'invention propose un dispositif de synchronisation d'un régime primaire d'un arbre primaire avec un régime secondaire d'un arbre secondaire de transmission dans une configuration où l'arbre primaire reçoit un couple d'une machine électrique et où le régime secondaire est inférieur au régime primaire, c'est-à-dire dans le cas d'un changement de vitesse ascendant. Lors d'une telle synchronisation, les arbres primaires et secondaires sont découplés, autrement dit, la boîte de vitesses est au neutre et le véhicule est en roue libre. Dans ladite configuration, la synchronisation consiste à commander la machine électrique pour qu'elle fournisse un couple de freinage à l'arbre primaire afin de réduire le régime primaire jusqu'à ce que l'écart entre le régime primaire et le régime secondaire soit inférieur à un seuil prédéterminé. L'arbre primaire en rotation a une énergie cinétique associée au régime primaire. Or, la réduction du régime primaire entraîne une diminution de l'énergie cinétique de l'arbre primaire. L'invention propose de prélever une portion de l'énergie cinétique de l'arbre primaire lors de son freinage par la machine électrique et de la stocker plutôt que de la dissiper. La portion d'énergie cinétique est prélevée et transformée en énergie électrique au moyen d'un élément régénératif puis est envoyée à un moyen de stockage d'énergie.

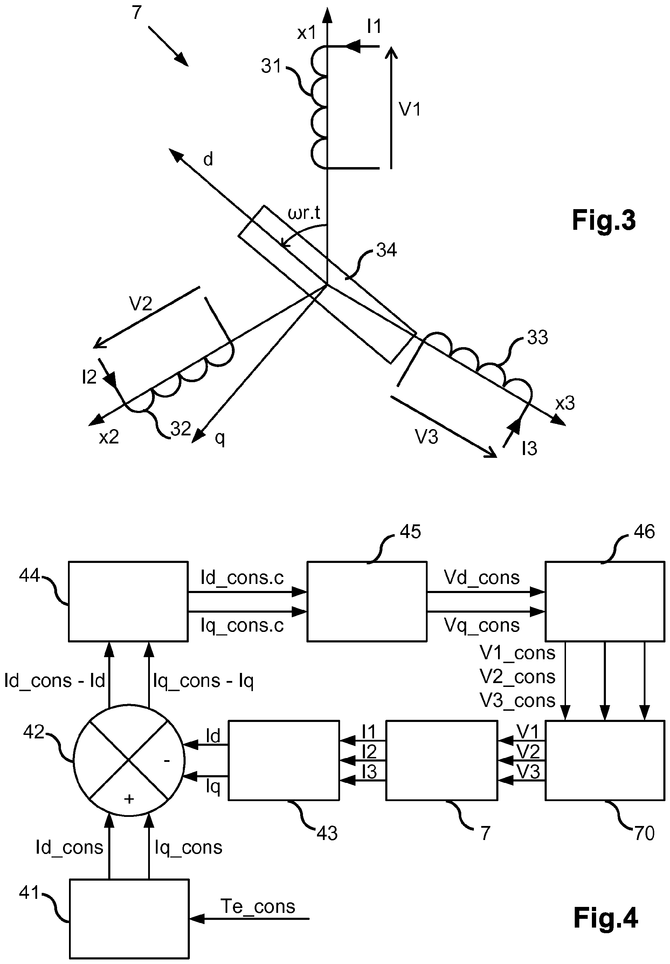

A la figure 3 est représentée sous forme schématique une machine électrique 7 conforme à l'invention dans un repère de Park. La machine électrique 7 est par exemple une machine électrique synchrone triphasée à aimant permanent. La machine électrique 7 comporte un stator comprenant trois bobines 31, 32 et 33, alignées respectivement avec trois axes x1, x2, x3 formant entre eux trois angles de $2\pi/3$. Dans les trois bobines 31, 32, 33 circulent respectivement des courants I1, I2, I3 sinusoïdaux et déphasés chacun de $2\pi/3$. Des tensions V1, V2 et V3 également sinusoïdales et déphasées chacune de $2\pi/3$ sont appliquées respectivement aux bornes des trois bobines 31, 32, 33. Le stator crée ainsi un champ magnétique tournant dans la machine électrique 7. La machine électrique 7 comporte en outre un rotor 34 comportant un aimant permanent qui s'aligne naturellement sur le champ magnétique tournant créé par le stator, de sorte à tourner avec une vitesse angulaire $\omega r$. Dans la configuration de l'exemple, la vitesse angulaire $\omega r$ est égale à la pulsation des signaux sinusoïdaux de courant et de tension. Le repère de Park représenté comporte deux axes d et q, d étant aligné avec le champ magnétique tournant et q étant directement orthogonal à d. Dans le repère de Park, les projections des courants et des tensions sont des constantes.

4

Dans le but de fournir, avec la machine électrique 7, un couple de freinage contrôlé à l'arbre primaire, une structure de commande est proposée. La figure 4 propose un exemple de structure de commande correspondant à la modélisation représentée en figure 3. La modélisation de la figure 3 permet d'établir les relations suivantes entre différentes grandeurs utilisées dans la commande de la machine électrique 7 :

$$(E_1) \begin{cases} V_d = R_s \cdot I_d + L_d \cdot \dfrac{dI_d}{dt} - \omega_r \cdot L_q \cdot I_q \\ V_q = R_s \cdot I_q + L_q \cdot \dfrac{dI_q}{dt} + \omega_r \big( L_d \cdot I_d + \Phi_f \big) \end{cases}$$

où

- $V_d$ et $V_q$ sont les tensions appliquées respectivement sur les axes d et q du repère de Park en Volt,
- $I_d$ et $I_q$ sont les courants circulant respectivement sur les axes d et q du repère de Park en Ampère,
- $R_s$ est la résistance équivalente du stator de la machine électrique en Ohm,
- $L_d$ et $L_q$ sont les inductances respectivement sur les axes d et q du repère de Park en Henry,
- $\omega_r$ est la vitesse de rotation du champ magnétique de la machine électrique en radiant par seconde,
- $\Phi_f$ est le flux généré par l'aimant du rotor en Weber.

Avec ces notations, la machine électrique fournit un couple $T_e$ qui s'écrit :

$$(E_2) \qquad T_e = \Phi_f \cdot I_q + I_d \cdot I_q \big( L_d - L_q \big).$$

Les relations ci-dessus permettent d'établit la structure de commande de la figure 4. La donnée d'entrée Te_cons correspond au couple de freinage de consigne à fournir par la machine électrique 7. Un premier module de calcul 41 permet de calculer, à partir du couple de freinage de consigne Te_cons, les courants de consigne Id_cons et Iq_cons dans le repère de Park de sorte à satisfaire l'équation E2. Les courants de consigne Id_cons et Iq_cons sont comparés, par un deuxième module de calcul 42, aux courants Id et Iq obtenus à partir de la transformée de Park des courants I1, I2 et I3 mesurés dans la machine électrique 7, la transformée de Park étant réalisée par un troisième module de calcul 43. Les comparaisons des courants Id_cons-Id et Iq_cons-Iq issues du deuxième module de calcul 42 permettent ensuite, dans un quatrième module de calcul 44, de calculer des consignes de courant corrigées Id_cons.c et Iq_cons.c. A partir des consignes de courant corrigées Id_cons.c et Iq_cons.c, des consignes de tension dans le repère de Park Vd_cons et Vq_cons sont calculées dans un cinquième module de calcul 45, conformément au système d'équations E1. Un sixième module de calcul 46 effectue une transformée inverse de Park à partir des consignes de tension dans le repère de Park Vd_cons et Vq_cons pour obtenir les consignes de tensions réelles V1_cons, V2_cons et V3_cons. Un onduleur 70 applique à la machine électrique 7 des tensions sinusoïdales V1, V2 et V3 conformes aux consignes de tensions réelles V1_cons, V2_cons et V3_cons.

Le couple Te de freinage obtenu en appliquant le couple de freinage de consigne Te_cons est maintenu jusqu'à ce que l'écart entre le régime primaire et le régime secondaire passe en dessous d'une valeur seuil prédéterminée.

L'onduleur 70 est configuré pour prélever une portion de l'énergie cinétique perdue par l'arbre primaire au cours de son freinage, pour transformer cette portion d'énergie cinétique en énergie électrique et pour transmettre ladite énergie électrique à un moyen de stockage d'énergie, par exemple une batterie. Dans cet exemple, l'onduleur 70 est l'élément régénératif.

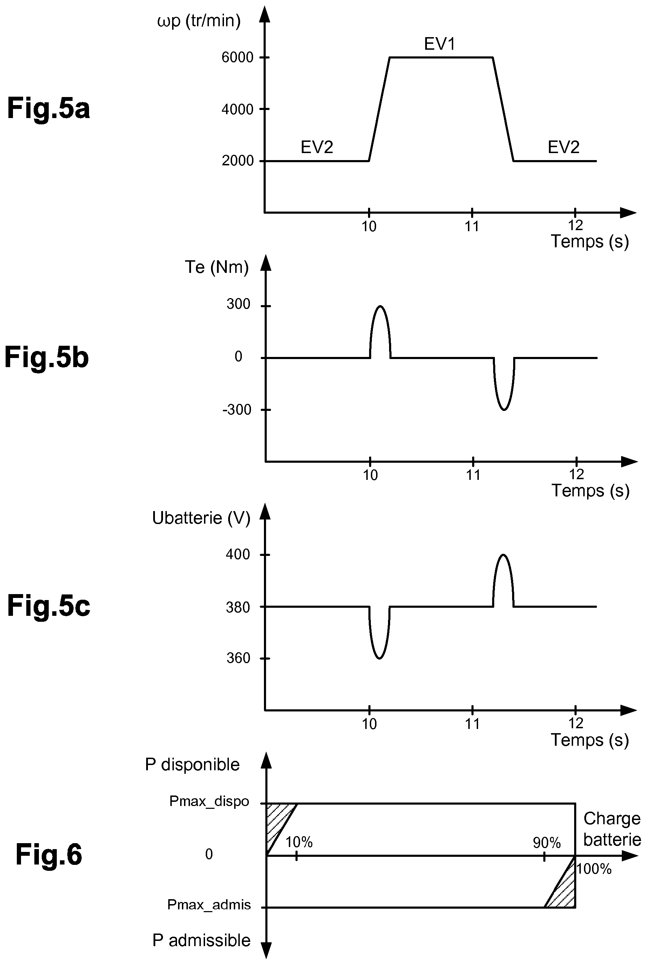

Les figures 5a, 5b et 5c montrent que lors d'un changement de rapport de transmission ascendant, de EV1 vers EV2 par exemple, la machine électrique 7 fournit un couple Te négatif afin de réduire le régime primaire ωp qui passe par exemple de 6000 tr/min à 2000 tr/min. Dans ce contexte, l'onduleur envoie de l'énergie électrique, issue de l'énergie cinétique de l'arbre primaire, à la batterie et la tension Ubatterie aux bornes de la batterie augmente. Inversement, lors d'un changement de rapport de transmission descendant, de EV2 vers EV1 par exemple, la machine électrique 7 fournit un couple Te positif afin d'augmenter le régime primaire ωp qui passe par exemple de 2000 tr/min à 6000 tr/min. Dans ce contexte, l'onduleur prélève de l'énergie électrique à la batterie et la tension Ubatterie aux bornes de la batterie diminue.

A la figure 6 est représentée la puissance disponible Pdisponible que peut fournir la batterie, et la puissance admissible Padmissible que peut recevoir la batterie, en fonction du niveau de charge de la batterie. En considérant une configuration classique, c'est-à-dire la portion non hachurée du graphique, lorsque le niveau de charge de la batterie est faible, par exemple, lorsque le niveau de charge est inférieur à 10%, la batterie ne peut fournir qu'une puissance Pdisponible limitée, inférieure à la puissance Pmax_dispo disponible lorsque le niveau de charge est supérieur à 10%. Par conséquent, la batterie ne peut fournir une tension Ubatterie suffisante pour synchroniser les arbres primaire et secondaire en un temps suffisamment court pour assurer un bon agrément de conduite. De manière analogue, lorsque le niveau de charge de la batterie est élevé, par exemple, lorsque le niveau de charge est supérieur à 90%, la batterie ne peut recevoir qu'une puissance Padmissible limitée, inférieure à la puissance Pmax_admis acceptée lorsque le niveau de charge est inférieur à 90%. Par conséquent, la batterie ne peut recevoir une tension Ubatterie suffisante pour synchroniser les arbres primaire et secondaire en un temps suffisamment court pour assurer un bon agrément de conduite. Dans cette situation, la diminution du régime primaire se fait par pertes mécaniques et l'énergie cinétique correspondant à la diminution du régime primaire est dissipée. Cette situation entraîne le double désavantage d'un mauvais agrément de conduite et d'une mauvaise valorisation de l'énergie. L'invention propose de coupler un tampon d'énergie à la batterie pour assurer un fonctionnement optimal y compris dans les situations limites où le niveau de charge est inférieur à 10% ou supérieur à 90%. Le fonctionnement optimal correspond à une puissance disponible Pdisponible égale à Pmax_dispo et une puissance admissible Padmissible égale à Pmax_admis quel que soit le niveau de charge de la batterie, comme représenté sur la figure 6 par la combinaison de la portion hachurée et de la portion non hachurée du graphique.

D'un point de vue du dimensionnement du tampon d'énergie et à titre purement illustratif, la puissance nominale de la machine électrique étant de l'ordre de 50kW et la durée de la synchronisation étant de l'ordre de 200ms, le tampon d'énergie doit être dimensionné pour recevoir ou fournir une puissance de 50kW et recevoir ou fournir une énergie de 10kJ. Le tampon d'énergie est par exemple un ensemble de super-capacités en série de sorte à obtenir une capacité équivalente de 50mF, les super-capacités présentant l'avantage de permettre d'atteindre les capacités de stockage d'énergie visées pour un coût et un encombrement restreints.

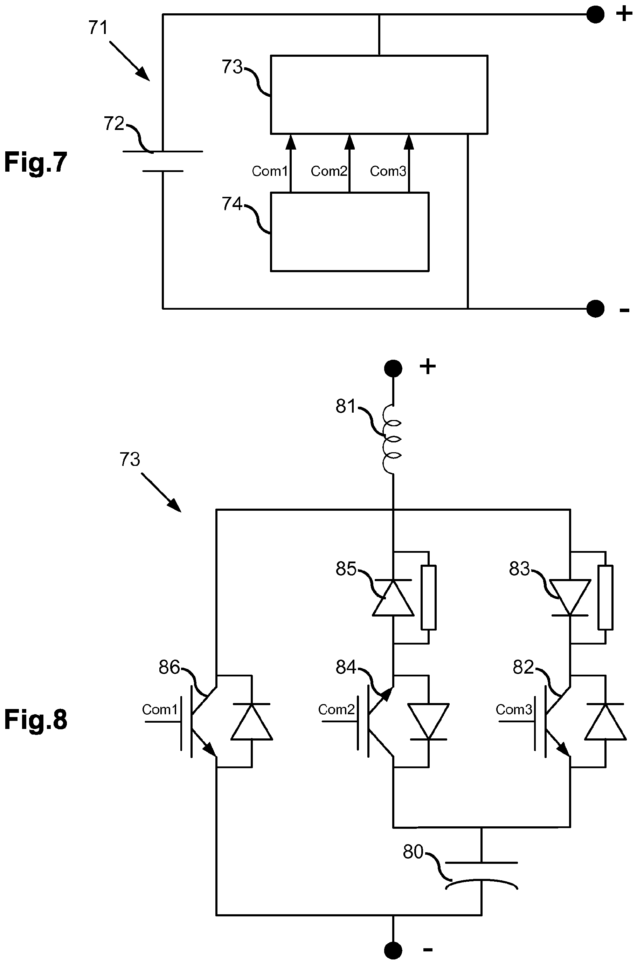

A la figure 7 est représenté un moyen de stockage 71 comportant une batterie 72 et un tampon d'énergie 73 commandé par une unité de commande 74.

A la figure 8 est représenté le tampon d'énergie 73 de la figure 7. Le tampon d'énergie 73 comporte un ensemble de super-capacités en série 80 et une bobine 81 permettant de stocker de l'énergie dans un premier temps pour restituer l'énergie dans un deuxième temps. Le tampon d'énergie 73 comporte également deux transistors 82 et 84 commandés par l'intermédiaire respectivement des Com2 et Com2 de l'unité de commande 74 et couplés respectivement aux diodes 83 et 85 imposant le sens du courant. La diode 83 impose un sens de courant correspondant à la charge de l'ensemble de super-capacités 80 et la diode 85 impose un sens de courant correspondant à la décharge de l'ensemble de super-capacités. Par conséquent, pour commander la charge du tampon d'énergie 73, l'unité de commande 74 commande la fermeture du transistor 82 et l'ouverture du transistor 84 et inversement pour la décharge. Le tampon d'énergie 73 comporte en outre un transistor 86 permettant de hacher la tension aux bornes de l'ensemble de super-capacités 80. En phase de charge du tampon d'énergie 73, lorsque la tension aux bornes de l'ensemble de super-capacités 80 est inférieure à la tension aux bornes de la batterie, l'unité de commande 74 commande l'ouverture du transistor 86. Lorsque le rapport des tensions aux bornes de l'ensemble des super-capacités et de la batterie s'inverse, l'unité de commande 74 commande des cycles de fermeture et d'ouverture du transistor 86 de sorte à hacher la tension aux bornes de l'ensemble de super-capacités 80 pour ramener la tension moyenne aux bornes de l'ensemble de super-capacités 80 en dessous de la tension batterie et ainsi continuer à charger le tampon d'énergie. En phase de décharge du tampon d'énergie dans la batterie, l'unité de commande 74 commande également le transistor 86 de sorte à hacher la tension aux bornes de l'ensemble de super-capacités afin de réguler le courant de recharge envoyé à la batterie 72.

Afin d'assurer un bon agrément de conduite en cas de niveau de charge de la batterie faible, l'unité de commande 74 est configurée pour détecter un passage du niveau de charge de la batterie en dessous d'un seuil bas prédéfini et, le cas échéant, commander l'alimentation du tampon d'énergie 73 par la batterie afin de maintenir un niveau d'énergie prédéterminé dans le tampon d'énergie permettant de réaliser une synchronisation de régime avec le niveau de puissance maximal admissible. La batterie émet sur un réseau de communication du véhicule, couramment appelé CAN, des informations nécessaires à l'unité de commande 74 pour détecter un passage du niveau de charge de la batterie en dessous d'un seuil bas prédéfini. Concernant le tampon d'énergie 73, un composant de mesure de tension permet d'évaluer l'énergie stockée dans le tampon d'énergie.

L'invention est décrite dans ce qui précède à titre d'exemple. Il est entendu que la personne de l'art est à même de réaliser différentes variantes de réalisation de l'invention, en associant par exemple les différentes caractéristiques ci-dessus prises seules ou en combinaison, sans pour autant sortir du cadre de l'invention définie par les revendications ci-jointes.

**Revendications**

1.   Dispositif de synchronisation d'un régime primaire ($\omega$p) d'un arbre primaire (1, 6) recevant un couple électrique d'une machine électrique (7), avec un régime secondaire inférieur au régime primaire d'un arbre secondaire (10) de transmission, les arbres primaire (1, 6) et secondaire (10) étant découplés, l'arbre primaire (1, 6) ayant une énergie cinétique associée au régime primaire (ωp), comportant des moyens pour fournir un couple électrique (Te) de freinage à l'arbre primaire (1, 6) jusqu'à ce que le régime primaire soit sensiblement égal au régime secondaire, ainsi que des moyens pour récupérer au moins partiellement, sous forme d'énergie électrique, l'énergie cinétique perdue par l'arbre primaire (1, 6) et transmettre ladite énergie électrique à un moyen de stockage d'énergie (71) le moyen de stockage d'énergie comportant une batterie (72) couplée à un tampon d'énergie (73),

le dispositif comportant en outre une unité de commande (74) configurée pour charger ladite énergie électrique dans le tampon d'énergie (73) pendant le freinage de l'arbre primaire et pour décharger le tampon d'énergie (73) dans la batterie (72) une fois l'arbre primaire synchronisé,

le dispositif étant **caractérisé en ce que** l'unité de commande (74) est configurée pour détecter un passage du niveau de charge de la batterie (72) en dessous d'un seuil bas prédéfini et pour maintenir un niveau d'énergie prédéterminé dans le tampon d'énergie (73) en cas de détection d'un passage du niveau de charge de la batterie (72) en dessous du seuil bas.

2. Dispositif selon la revendication 1 **caractérisé en ce qu'**il comporte un onduleur (70).

3. Dispositif selon la revendication 3 **caractérisé en ce que** le tampon d'énergie (73) comporte au moins une super-capacité (80).

4. Dispositif selon l'une quelconque des revendications précédentes **caractérisé en ce que** l'unité de commande (74) comporte un circuit de hachage (86).

5. Dispositif selon l'une quelconque des revendications précédentes **caractérisé en ce que** l'unité de commande (74) est configurée pour alimenter la machine électrique (7) avec l'énergie contenue dans le tampon d'énergie (73) lorsque la machine électrique (7) fournit un couple d'accélération pour synchroniser le régime primaire (ωp) de l'arbre primaire (1, 6) avec le régime secondaire supérieur au régime primaire de l'arbre secondaire (10).

6. Véhicule automobile électrique ou hybride comprenant un dispositif selon l'une quelconque des revendications 1 à 5.

7. Procédé de synchronisation d'un régime primaire (ωp) d'un arbre primaire (1, 6) recevant un couple électrique d'une machine électrique (7), avec un régime secondaire inférieur au régime primaire d'un arbre secondaire (10) de transmission, les arbres primaire (1, 6) et secondaire (10) étant découplés, l'arbre primaire (1, 6) ayant une énergie cinétique associée au régime primaire(ωp), la machine électrique (7) étant commandée pour fournir en mode régénératif un couple électrique (Te) de freinage à l'arbre primaire (1, 6) jusqu'à ce que le régime primaire soit sensiblement égal au régime secondaire, de sorte à récupérer au moins partiellement l'énergie cinétique de l'arbre primaire (1, 6) et transmettre ladite énergie à un moyen de stockage (71) comportant une batterie (72) couplée à un tampon d'énergie (73),

le moyen de stockage étant commandé pour charger ladite énergie électrique dans le tampon d'énergie (73) pendant le freinage de l'arbre primaire et pour décharger le tampon d'énergie (73) dans la batterie (72) une fois l'arbre primaire synchronisé,

le procédé étant **caractérisé en ce qu'**il comporte une détection d'un passage du niveau de charge de la batterie (72) en dessous d'un seuil bas prédéfini et un maintien d'un niveau d'énergie prédéterminé dans le tampon d'énergie (73) si l'étape de détection détecte un passage du niveau de charge de la batterie (72) en dessous du seuil bas.

## Patentansprüche

1. Vorrichtung zur Synchronisation einer Primärdrehzahl (ωp) einer Antriebswelle (1, 6), die ein elektrisches Drehmoment einer elektrischen Maschine (7) aufnimmt, mit einer Sekundärdrehzahl, die kleiner als die Primärdrehzahl ist, einer Getriebehauptwelle (10), wobei die Antriebswelle (1, 6) und die Hauptwelle (10) entkoppelt sind, wobei die Antriebswelle (1, 6) eine der Primärdrehzahl (ωp) zugeordnete kinetische Energie aufweist, Mittel aufweisend, um der Antriebswelle (1, 6) ein elektrisches Bremsmoment (Te) zu liefern, bis die Primärdrehzahl im Wesentlichen gleich der Sekundärdrehzahl ist, sowie Mittel, um die von der Antriebswelle (1, 6) verlorene kinetische Energie wenigstens teilweise in Form von elektrischer Energie zurückzugewinnen und diese elektrische Energie zu einem Energiespeichermittel (71) zu übertragen,

wobei das Energiespeichermittel eine Batterie (72) umfasst, die mit einem Energiepuffer (73) gekoppelt ist,

wobei die Vorrichtung außerdem eine Steuereinheit (74) umfasst, die dafür ausgelegt ist, die elektrische Energie während des Bremsens der Antriebswelle in den Energiepuffer (73) zu laden und den Energiepuffer (73) in die Batterie (72) zu entladen, sobald die Antriebswelle synchronisiert ist,
wobei die Vorrichtung **dadurch gekennzeichnet ist, dass** die Steuereinheit (74) dafür ausgelegt ist, ein Absinken des Ladezustands der Batterie (72) unter einen vordefinierten unteren Schwellenwert zu detektieren und im Falle einer Detektion eines Absinkens des Ladezustands der Batterie (72) unter den unteren Schwellenwert ein vorbestimmtes Energieniveau im Energiepuffer (73) aufrechtzuerhalten.

2. Vorrichtung nach Anspruch 1, **dadurch gekennzeichnet, dass** sie einen Wechselrichter (70) umfasst.

3. Vorrichtung nach Anspruch 3, **dadurch gekennzeichnet, dass** der Energiepuffer (73) wenigstens eine Superkapazität (80) umfasst.

4. Vorrichtung nach einem der vorhergehenden Ansprüche, **dadurch gekennzeichnet, dass** die Steuereinheit (74) eine Hash-Schaltung (86) umfasst.

5. Vorrichtung nach einem der vorhergehenden Ansprüche, **dadurch gekennzeichnet, dass** die Steuereinheit (74) dafür ausgelegt ist, die elektrische Maschine (7) mit der im Energiepuffer (73) enthaltenen Energie zu versorgen, wenn die elektrische Maschine (7) ein Beschleunigungsmoment liefert, um die Primärdrehzahl ($\omega$p) der Antriebswelle (1, 6) mit der Sekundärdrehzahl der Hauptwelle (10), die größer als die Primärdrehzahl ist, zu synchronisieren.

6. Elektro- oder Hybridkraftfahrzeug, welches eine Vorrichtung nach einem der Ansprüche 1 bis 5 umfasst.

7. Verfahren zur Synchronisation einer Primärdrehzahl ($\omega$p) einer Antriebswelle (1, 6), die ein elektrisches Drehmoment einer elektrischen Maschine (7) aufnimmt, mit einer Sekundärdrehzahl, die kleiner als die Primärdrehzahl ist, einer Getriebehauptwelle (10), wobei die Antriebswelle (1, 6) und die Hauptwelle (10) entkoppelt sind, wobei die Antriebswelle (1, 6) eine der Primärdrehzahl ($\omega$p) zugeordnete kinetische Energie aufweist, wobei die elektrische Maschine (7) so gesteuert wird, dass sie im regenerativen Betrieb der Antriebswelle (1, 6) ein elektrisches Bremsmoment (Te) liefert, bis die Primärdrehzahl im Wesentlichen gleich der Sekundärdrehzahl ist, derart, dass die kinetische Energie der Antriebswelle (1, 6) wenigstens teilweise zurückzugewonnen und diese Energie zu einem Speichermittel (71) übertragen wird, das eine Batterie (72) umfasst, die mit einem Energiepuffer (73) gekoppelt ist,
wobei das Speichermittel so gesteuert wird, dass es die elektrische Energie während des Bremsens der Antriebswelle in den Energiepuffer (73) lädt und den Energiepuffer (73) in die Batterie (72) entlädt, sobald die Antriebswelle synchronisiert ist,
wobei das Verfahren **dadurch gekennzeichnet ist, dass** es eine Detektion eines Absinkens des Ladezustands der Batterie (72) unter einen vordefinierten unteren Schwellenwert und eine Aufrechterhaltung eines vorbestimmten Energieniveaus in dem Energiepuffer (73), falls im Schritt der Detektion ein Absinken des Ladezustands der Batterie (72) unter den unteren Schwellenwert detektiert wird, umfasst.

**Claims**

1. Device for synchronizing a primary speed ($\omega$p) of a primary shaft (1, 6) receiving an electrical torque from an electrical machine (7), with a secondary speed lower than the primary speed of a secondary transmission shaft (10), the primary (1, 6) and secondary (10) shafts being decoupled, the primary shaft (1, 6) having a kinetic energy associated with the primary speed ($\omega$p), comprising means for supplying a braking electrical torque (Te) to the primary shaft (1, 6) until the primary speed is substantially equal to the secondary speed, and means for at least partially recovering, in the form of electrical energy, the kinetic energy lost by the primary shaft (1, 6) and transmitting said electrical energy to an energy storage means (71)
the energy storage means comprising a battery (72) coupled to an energy buffer (73),
the device also comprising a control unit (74) configured to charge said electrical energy in the energy buffer (73) during the braking of the primary shaft and to discharge the energy buffer (73) into the battery (72) once the primary shaft is synchronized,
the device being **characterized in that** the control unit (74) is configured to detect a transition of the level of charge of the battery (72) below a predefined low threshold and to maintain a predetermined energy level in the energy buffer (73) in case of detection of a transition of the level of charge of the battery (72) below the low threshold.

2. Device according to Claim 1, **characterized in that** it comprises an inverter (70).

3. Device according to Claim 3, **characterized in that** the energy buffer (73) comprises at least one supercapacitor (80).

4. Device according to any one of the preceding claims, **characterized in that** the control unit (74) comprises a copping circuit (86).

5. Device according to any one of the preceding claims, **characterized in that** the control unit (74) is configured to supply the electrical machine (7) with the energy contained in the energy buffer (73) when the electrical machine (7) supplies an acceleration torque to synchronize the primary speed ($\omega p$) of the primary shaft (1, 6) with the secondary speed higher than the primary speed of the secondary shaft (10).

6. Electrical hybrid motor vehicle comprising a device according to any one of Claims 1 to 5.

7. Method for synchronizing a primary speed ($\omega p$) of a primary shaft (1, 6) receiving an electrical torque from an electrical machine (7), with a secondary speed lower than the primary speed of a secondary transmission shaft (10), the primary (1, 6) and secondary (10) shafts being decoupled, the primary shaft (1, 6) having a kinetic energy associated with the primary speed ($\omega p$), the electrical machine (7) being controlled to supply, in regenerative mode, an electrical braking torque (Te) to the primary shaft (1, 6) until the primary speed is substantially equal to the secondary speed, so as to at least partially recover the kinetic energy from the primary shaft (1, 6) and transmit said energy to a storage means (71) comprising a battery (72) coupled to an energy buffer (73), the storage means being controlled to charge said electrical energy into the energy buffer (73) during the braking of the primary shaft and to discharge the energy buffer (73) into the battery (72) once the primary shaft is synchronized, the method being **characterized in that** it comprises a detection of a transition of the level of charge of the battery (72) below a predefined low threshold and a maintenance of a predetermined energy level in the energy buffer (73) if the detection step detects a transition of the level of charge of the battery (72) below the low threshold.

# Fig.1
## (Art antérieur)

# Fig.2a
## (Art antérieur)

Rapport de vitesse

EV1
neutre
EV2

24        25        26        Temps (s)

# Fig.2b
## (Art antérieur)

ωp (tr/min)

6000
4000
2000

24        25        26        Temps (s)

**Fig.3**

**Fig.4**

**Fig.5a**

**Fig.5b**

**Fig.5c**

**Fig.6**

**Fig.7**

**Fig.8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2988799
- FR 3003620
- WO 2009136819 A